# EUROPÄISCHE PATENTSCHRIFT

(11) **EP 3 136 553 B1**
(45) Veröffentlichungstag und Bekanntmachung des Hinweises auf die Patenterteilung: **11.10.2017**
(21) Anmeldenummer: 15002533.6
(22) Anmeldetag: 26.08.2015
(51) Int. Cl.: H02K 3/47, H02K 5/08, H02K 5/16, H02K 5/22

(54) **MIT KUNSTSTOFF UMSPRITZTES STATORSYSTEM MIT VERBESSERTER WÄRMEABFUHR UND VERFAHREN ZU DESSEN HERSTELLUNG**
STATOR SYSTEM WITH A SHEATHING OF PLASTIC WITH IMPROVED HEAT DISSIPATION AND METHOD FOR PRODUCING THE SAME
SYSTEME DE STATOR ENROBE DE PLASTIQUE PAR EXTRUSION DOTE D'UNE DISSIPATION DE CHALEUR AMELIOREE ET SON PROCEDE DE FABRICATION

(43) Veröffentlichungstag der Anmeldung: 01.03.2017
(73) Patentinhaber: Lakeview Innovation Ltd., 6374 Buochs (CH)
(72) Erfinder: Hänni, Tobias, CH-6003 Luzern (CH); Schelling, Remo, CH-6055 Alpnach-Dorf (CH); Mayer, Jürgen, CH-6072 Sachseln (CH)
(74) Vertreter: Grünecker Patent- und Rechtsanwälte PartG mbB

(56) Entgegenhaltungen:
- EP-A1- 0 254 930
- EP-A1- 0 344 473
- CH-A5- 692 437
- US-A- 4 352 897
- US-A1- 2004 056 537
- US-A1- 2008 084 131

## Beschreibung

Die vorliegende Erfindung betrifft ein Statorsystem für einen Elektromotor mit Innenläufer nach dem Oberbegriff des unabhängigen Anspruchs 1. Ein gattungsgemäßes Statorsystem weist eine Statorwicklung und einen die Statorwicklung radial umschließenden Außenrückschluss aus Metall auf. Der Außenrückschluss ist von einer Haltestruktur umgeben, die das Statorsystem zusammenhält, wobei die Haltestruktur aus Kunststoff in Form eines Käfigs an den Außenrückschluss angespritzt ist, sodass der Außenrückschluss bereichsweise nicht von der Haltestruktur bedeckt ist sondern freiliegt.

Statorsysteme für Elektromotoren mit Innläufer sind aus dem Stand der Technik bekannt. Als Haltestruktur dient entweder eine Gehäusehülse, die zumeist aus Metall besteht, oder sie wird durch eine Kunststoffumspritzung gebildet, die den Außenrückschluss vollständig umschließt.

Ein Statorsystem für einen Elektromotor mit Innenläufer ist beispielsweise aus EP2017944A1 bekannt. Der Außenrückschluss dieses Statorsystems besteht aus einem geschichteten Blechpaket, die Haltestruktur wird durch eine dünnwandige Gehäusehülse aus Metall gebildet.

Durch eine Kunststoffumspritzung lassen sich die Bauteile des Statorsystems auf besonders einfache und kostengünstige Weise fixieren. Ein zusätzliches äußeres Gehäuse ist in diesem Fall nicht notwendig. Die Kunststoffumspritzung bildet selbst das Gehäuse des späteren Elektromotors. Im Vergleich zu einer Gehäusehülse aus Metall hat eine Kunststoffumspritzung jedoch den Nachteil, dass der Kunststoff eine schlechtere Wärmeübertragung und damit eine schlechtere Wärmeabfuhr nach außen bedingt. Dies hat vor allem bei überlastfähigen Elektromotoren mit eisenloser hohlzylindrischer Statorwicklung zur Folge, dass die maximale Leistungsfähigkeit aufgrund der reduzierten Wärmeübertragung unnötig limitiert wird. Insbesondere bei schnell drehenden Kleinmotoren mit einem Durchmesser kleiner oder gleich 45 mm, insbesondere kleiner oder gleich 25 mm, ist daher eine verbesserte Wärmeabfuhr wünschenswert.

Ein Statorsystem nach dem Oberbegriff des unabhängigen Anspruchs 1 ist beispielsweise aus EP 0344473 A1 bekannt.

Aufgabe der vorliegenden Erfindung ist es, ein Statorsystem der gattungsgemäßen Art anzugeben, das sich besonders einfach und kostengünstig herstellen lässt und gleichzeitig eine verbesserte Wärmeabfuhr nach außen gewährleistet.

Die Aufgabe wird gelöst durch die Merkmale des unabhängigen Anspruchs 1. Demnach liegt bei einem gattungsgemäßen Statorsystem dann eine erfindungsgemäße Lösung der Aufgabe vor, wenn die Statorwicklung eine eisenlose hohlzylindrische Wicklung ist, wobei das Statorsystem ferner einen Wicklungsträger zur Halterung der Statorwicklung aufweist, wobei der Wicklungsträger an einem axialen Ende des Außenrückschlusses angeordnet ist und mehrere Vorsprünge aufweist, die in die axial verlaufenden Ausnehmungen am Außenumfang des Außenrückschlusses eingesteckt sind, und wobei der Käfig die aus Außenrückschluss und Wicklungsträger bestehende Einheit umgibt. Der Außenrückschluss ist teilweise von der Haltestruktur in Form des Kunststoffkäfigs umschlossen, wobei freiliegende Bereiche des Außenrückschlusses eine optimale Wärmeabfuhr nach außen gewährleisten. Die Statorwicklung ist nicht auf Zähne des Stators aufgewickelt sondern selbsttragend ausgeführt. Dadurch ergibt sich eine besonders einfache Montage des Statorsystems, indem die eisenlose hohlzylindrische Wicklung in einem ersten Herstellungsschritt einfach in den Außenrückschluss eingeschoben bzw. eingesetzt wird. Die Statorwicklung ist vorzugsweise dreiphasig ausgeführt. Es wird darauf hingewiesen, dass die Statorwicklung alternativ auch aus mehreren Spulen bestehen kann, die auf entsprechende radial nach innen gerichtete Zähne des Außenrückschlusses aufgewickelt sind. Der Wicklungsträger kann nach dem Einsetzen der Statorwicklung in den Außenrückschluss auf einfache Weise auf den Außenrückschluss aufgesteckt werden. Die endgültige Fixierung der Bauteile wird durch die Kunststoffumspritzung in Form des Käfigs erzielt. Der Wicklungsträger besteht vorzugsweise ebenfalls aus Kunststoff. Die Kunststoffumspritzung in Form des Käfigs ist demnach auch an den Wicklungsträger angespritzt und umschließt diesen vorzugsweise über seine komplette axiale Länge. Die Erfindung eignet sich besonders für Statorsysteme von bürstenlosen Elektromotoren. Weiter vorzugsweise eignet sich das erfindungsgemäße Statorsystem für schnelldrehende Kleinmotoren mit einem Durchmesser kleiner oder gleich 45 mm, insbesondere kleiner oder gleich 25 mm. Das Statorsystem ist hohl und weist vorzugsweise sowohl am vorderen als auch am hinteren Ende jeweils eine Öffnung auf, um den Innenläufer aufnehmen zu können.

Vorteilhafte Ausgestaltungen der vorliegenden Erfindung sind Gegenstand der Unteransprüche.

In einer besonders bevorzugten Ausführungsform der vorliegenden Erfindung weist der Käfig mehrere in axialer Richtung des Außenrückschlusses verlaufende Streben auf. Bei dieser Ausführungsform ergibt sich ein besonders stabiler Zusammenhalt des Statorsystems. Ferner kann bei dieser Ausführungsform die Kunststoffumspritzung besonders einfach hergestellt werden. Es ist jedoch auch denkbar, dass die Streben nicht axial sondern windschief zur Achse des Statorsystem verlaufen oder dass der Käfig beispielsweise durch ein Gittergeflecht gebildet wird.

In einer ganz besonders bevorzugten Ausführungsform der vorliegenden Erfindung sind die Streben in axial verlaufende Ausnehmungen am Außenumfang des Außenrückschlusses eingespritzt. Die Ausnehmungen sind vorzugsweise gleichmäßig über den Umfang des Außenrückschlusses verteilt. Bei dieser Ausführungsform ergibt sich eine besonders stabile und vor allem kompakte Bauweise.

Weiter ist es von Vorteil, wenn sich die Streben des Käfigs bündig in die Kontur des Außenumfangs des Außenrückschlusses einfügen. Dadurch ergibt sich eine glatte Außenoberflache des Statorsystems bzw. des Elektromotors.

In einer weiteren besonders bevorzugten Ausführungsform der vorliegenden Erfindung weist der Außenrückschluss einen grundsätzlich rechteckigen Querschnitt auf, wobei sich die Ausnehmungen in Form von Nuten in den Ecken des rechteckigen Querschnitts befinden. Bei vielen Applikationen erleichtert dies den Einbau des Elektromotors. Zudem sind bei dieser Ausführungsform die freiliegenden Bereiche des Außenrückschlusses im wesentlichen plan und können daher für einen verbesserten Wärmeübergang mit einem ebenfalls planen Bauteil mit entsprechendem Wärmeübergangskoeffizienten zur Anlage gebracht werden. Eine besonders einfache Bauweise ergibt sich, wenn der Querschnitt des Außenrückschlusses grundsätzlich quadratisch ist.

In einer weiteren bevorzugten Ausführungsform der vorliegenden Erfindung weist der Käfig an den axialen Enden des Statorsystems jeweils einen Lagersitz zur Lagerung des Innenläufers auf. Die Lagersitze des Rotors können somit auf einfache und kostengünstige Weise in einem Arbeitsgang beim Umspritzen des Statorsystems hergestellt werden.

In einer weiteren bevorzugten Ausführungsform der vorliegenden Erfindung ist der Außenrückschluss ein stanzpaketiertes weichmagnetisches Blechpaket. Auch diese Ausführungsform trägt zu einer einfachen Herstellung des Statorsystems bei. Zudem gewährleistet diese Ausführungsform eine gute Wärmeübertragung aus dem Motorinneren über den Außenrückschluss nach außen. Das Blechpaket ist vorzugsweise sowohl innen als auch außen korrosionsbeständig beschichtet.
In einer weiteren bevorzugten Ausführungsform der vorliegenden Erfindung sind die freiliegenden Bereiche des Außenrückschluss lackiert, sodass sich zusammen mit dem Käfig eine glatte Außenoberfläche des Statorsystems ergibt. Sofern der Außenrückschluss aus einem Blechpaket besteht, werden die Rückschlussbleche dadurch zusätzlich vor äußeren Einflüssen geschützt.
In einer weiteren bevorzugten Ausführungsform der vorliegenden Erfindung handelt es sich bei dem Kunststoff, der für den Käfig verwendet wird, um Polyphtalamid. Dieses Material lässt sich besonders einfach verarbeiten und gewährleistet einen hervorragenden Zusammenhalt des Statorsystems.
Weiter ist es von Vorteil, wenn das Statorsystem ferner Anschlusskontakte aufweist, die auf den Wicklungsträger aufgesteckt sind, wobei Wicklungsdrahtabzapfungen der Statorwicklung elektrisch mit den Anschlusskontakten kontaktiert sind. Auch diese Ausführungsform trägt zu einer einfachen und kostengünstigen Herstellung des Statorsystems bei. Vorzugsweise werden die Wicklungsdrahtabzapfungen mit den Anschlusskontakten verlötet oder alternativ mittels Widerstandsschweissen kontaktiert. Die Anschlusskontakte werden nur teilweise umspritzt und stehen aus der Kunststoffumspritzung hervor. Sie verlaufen vorzugsweise in axialer Richtung des Statorsystems. Weiter vorzugsweise sind die Wicklungsdrahtabzapfungen radial nach außen abgebogen, sodass die Anschlusskontakte in axialer Richtung auf die Wicklungsdrahtabzapfungen aufgesteckt werden können. Die Anschlusskontakte weisen hierzu entsprechende Aufnahmeschlitze für die Wicklungsdrahtabzapfungen auf.

Die vorliegende Erfindung stellt ferner ein Verfahren zur Herstellung des erfindungsgemäßen Statorsystems bereit. Gemäß dem erfindungsgemäßen Verfahren wird zunächst die Statorwicklung in den Außenrückschluss eingesetzt. In weiterer Folge wird der Wicklungsträger derart aufgesteckt, dass dessen Vorsprünge in die axial verlaufenden Ausnehmungen am Außenumfang des Außenrückschlusses eingreifen. Anschließend wird die Haltetruktur des Statorsystems aus Kunststoff in Form eines Käfigs an die aus Außenrückschluss und Wicklungsträger bestehende Einheit angespritzt. Das Aufstecken der zuvor erwähnten Anschlusskontakte auf den Wicklungsträger und die Kontaktierung der Wicklungsdrahtabzapfungen erfolgen vor dem Umspritzen des Statorsystems mit dem Kunststoffkäfig.

Ein Ausführungsbeispiel der vorliegenden Erfindung wird im Folgenden anhand von Zeichnungen näher erläutert.

Es zeigen:
- Figur 1:: eine Explosionsdarstellung eines erfindungsgemäßen Statorsystems ohne Haltestruktur,
- Figur 2:: das Statorsystem aus Figur 1 im zusammengesetzten Zustand, ebenfalls ohne Haltestruktur,
- Figur 3:: die Darstellung des Statorsystems aus Figur 2 mit Haltestruktur in Form eines an den Außenrückschluss des Statorsystems angespritzten Käfigs, und
- Figur 4:: das Statorsystem aus Figur 3 inklusive Haltestruktur, von der anderen Seite.

Für die folgenden Ausführungen gilt, dass gleiche Teile durch gleiche Bezugszeichen bezeichnet sind. Sofern in einer Figur Bezugszeichen enthalten sind, auf die in der zugehörigen Figurenbeschreibung nicht eingegangen wird, so wird auf vorangehende oder nachfolgende Figurenbeschreibungen Bezug genommen.

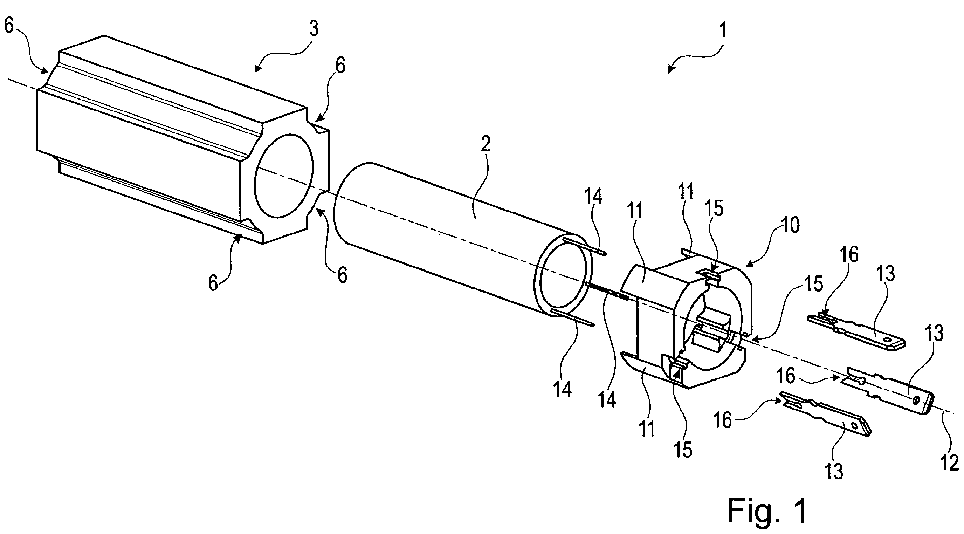

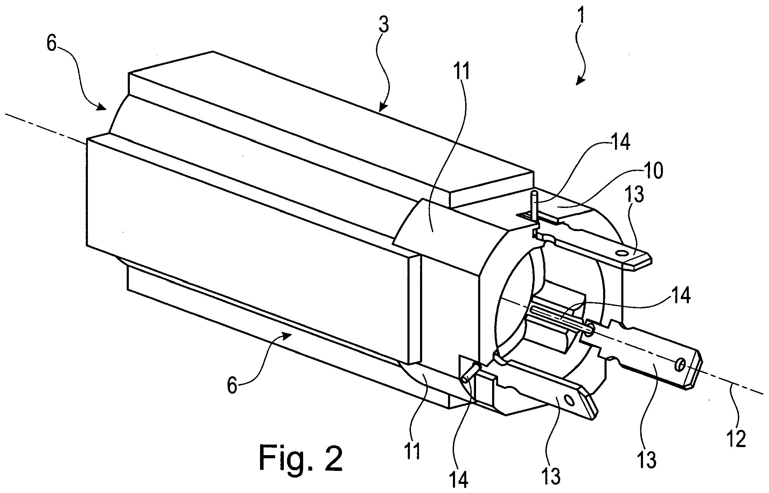

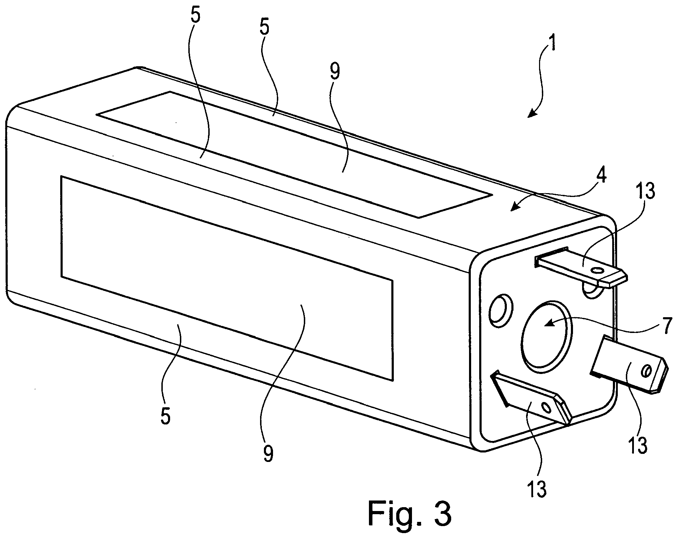

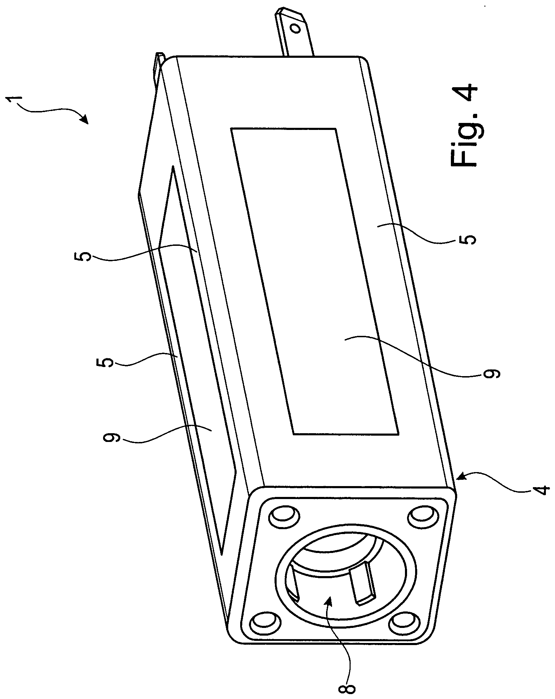

Die Figuren 1 bis 4 zeigen allesamt ein und dasselbe erfindungsgemäße Statorsystem 1 in unterschiedlichen Darstellungen, wobei die in den Figuren 3 und 4 gezeigte äußere Haltestruktur 4 des Statorsystems 1 in den Figuren 1 und 2 nicht dargestellt ist.

Beim dargestellten Ausführungsbeispiel handelt es sich um das Statorsystem eines schnell drehenden bürstenlosen Elektrokleinmotors. Das Statorsystem 1 umfasst eine eisenlose hohlzylindrische Statorwicklung 2, die am besten in der Explosionsdarstellung aus Figur 1 zu erkennen ist. Die eisenlose hohlzylindrische Statorwicklung ist beim dargestellten Ausführungsbeispiel dreiphasig ausgeführt und weist somit drei Phasenwicklungen auf, deren Wicklungsdrahtabzapfungen 14 an einem axialen Ende der Statorwicklung nach außen geführt sind. Die Statorwicklung ist derart konzipiert, dass der Rotor des Elektromotors als sogenannter Innenläufer im Inneren der Statorwicklung angeordnet wird. Die Statorwicklung 2 wird an demjenigen axialen Ende, an welchem die Wicklungsdrahtabzapfungen herausgeführt sind, von einem Wicklungsträger 10 gehalten. Wie am besten in Figur 2 zu erkennen ist, sind in den Wicklungsträger 10 drei Anschlusskontakte 13 eingesteckt, wobei jeder Anschlusskontakt jeweils mit einer der drei Wicklungsdrahtabzapfungen 14 elektrisch verbunden ist.

Die Statorwicklung 2 ist von einem ebenfalls hohlen Außenrückschluss 3 umschlossen, an dem, wie unten noch näher erläutert wird, der Wicklungsträger 10 fixiert ist. Der Außenrückschluss 3 besteht aus einem stanzpaketierten weichmagnetischen Blechpaket. Mögliche Ausführungen des Blechpakets sind aus dem Stand der Technik bekannt und sollen an dieser Stelle nicht näher erläutert werden. Der Außenrückschluss 3 hat einen grundsätzlich quadratischen Querschnitt. Die Außenseite des Außenrückschlusses weist somit insgesamt vier Eckbereiche auf. Wie Figur 1 zeigt, ist in jedem der vier Eckbereiche jeweils eine Nut 6 angeordnet, die parallel zur Achse 12 des Außenrückschlusses bzw. des Statorsystems verläuft.

Die Figuren 3 und 4 zeigen, dass der Außenrückschluss 3 von einer Haltestruktur umgeben ist, die aus Kunststoff in Form eines Käfigs 4 an den Außenrückschluss angespritzt ist, sodass der Außenrückschluss bereichsweise nicht von der Haltestruktur bedeckt ist sondern freiliegt. Die freiliegenden Bereiche 9 des Außenrückschlusses entsprechen im wesentlichen seinen vier Seitenflächen, die sich jeweils zwischen zwei Eckbereichen des Außenrückschlusses befinden. Der Käfig weist insgesamt vier in axialer Richtung verlaufende Streben 5 auf, die in die Nuten 6 am Außenumfang des Außenrückschlusses eingespritzt sind. Die vier Streben 5 fügen sich bündig in die Kontur des Außenumfangs ein und sind sowohl am vorderen als auch am hinteren axialen Ende des Statorsystems miteinander verbunden. An beiden axialen Enden bildet der Käfig 4 jeweils einen Lagersitz 7 bzw. 8 für den Innenläufer des Elektromotors. An demjenigen axialen Ende, an dem der Wicklungsträger 10 angeordnet ist, umschließt der Kunststoff diesen von außen vollständig. Der Wicklungsträger 10 ist dadurch in besonders stabiler Weise an dem Außenrückschluss 3 des erfindungsgemäßen Statorsystems 1 fixiert. Bei dem Kunststoff, der für die Umspritzung verwendet wird, handelt es sich vorzugsweise um Polyphtalamid.

Durch die Kunststoffumspritzung kann das erfindungsgemäße Statorsystem auf einfache und kostengünstige Weise hergestellt werden, wobei alle Komponenten des Statorsystems relativ zueinander fixiert werden. Gegenüber herkömmlichen Lösungen mit zusätzlicher Gehäusehülse bietet die Kunststoffumspritzung einen klaren Gewichtsvorteil. Durch die erfindungsgemäße Ausführung der Haltestruktur als Käfig wird zudem erreicht, dass die im Inneren des Elektromotors generierte Wärme optimal nach außen abgeführt werden kann. Die Wärmeübertragung findet dabei vorrangig über die freiliegenden Bereiche 9 des Außenrückschlusses 3 statt.

Nachfolgend wird das Verfahren zur Herstellung des erfindungsgemäßen Statorsystems kurz erläutert. In einem ersten Schritt wird die hohlzylindrische eisenlose Statorwicklung 2 in den Außenrückschluss 3 eingesetzt. Im nächsten Schritt wird der Wicklungsträger 10 auf die Statorwicklung und den Außenrückschluss 3 aufgesteckt. Der Wicklungsträger 10 weist hierfür vier Vorsprünge 11 auf, die beim Aufstecken des Wicklungsträgers auf den Außenrückschluss ein Stück weit in die vier Nuten 6 am Außenumfang des Außenrückschlusses eingreifen. Dadurch ist bereits eine wirksame Verdrehsicherung gegeben. Die drei Wicklungsdrahtabzapfungen 14 werden dann durch die in Figur 1 gezeigten Ausnehmungen 15 des Wicklungsträgers radial nach außen abgebogen. Anschließend werden die drei Anschlusskontakte 13 derart auf den Wicklungsträger 10 aufgesteckt, dass dabei eine elektrische Kontaktierung zwischen den Wicklungsdrahtabzapfungen 14 und den Anschlusskontakten 13 stattfindet. Die Anschlusskontakte 13 weisen zu diesem Zweck jeweils einen in Längsrichtung verlaufenden Schlitz 16 auf, in den die entsprechende radial abgebogene Wicklungsdrahtabzapfung 14 geklemmt wird. Für eine optimale elektrische Kontaktierung werden die Wicklungsdrahtabzapfungen mit den Anschlusskontakten verlötet.

Nun erfolgt die endgültige Fixierung der Bauteile zueinander, indem der in den Figuren 3 und 4 gezeigte Kunststoffkäfig 4 an die vormontierte Baugruppe angespritzt wird. Die Baugruppe wird zu diesem Zweck in eine entsprechende Form eingesetzt und anschließend mit dem Kunststoff umspritzt.

In einem letzten Schritt können die freiliegenden Bereiche 9 des Außenrückschlusses zusätzlich lackiert werden, damit sich zusammen mit der Kunststoffumspritzung eine glatte Außenoberfläche des Statorsystems bzw. Elektromotors gibt. Die Rückschlussbleche des Außenrückschlusses werden auf diese Weise zusätzlich vor äußeren Einflüssen geschützt.

## Patentansprüche

1. Statorsystem (1) für einen Elektromotor mit Innenläufer, wobei das Statorsystem (1) eine Statorwicklung (2) und einen die Statorwicklung (2) radial umschließenden Außenrückschluss (3) aus Metall aufweist, und wobei der Außenrückschluss (3) von einer Haltestruktur umgeben ist, die das Statorsystem (1) zusammenhält, wobei die Haltestruktur aus Kunststoff in Form eines Käfigs (4) an den Außenrückschluss (3) angespritzt ist, sodass der Außenrückschluss (3) bereichsweise nicht von der Haltestruktur bedeckt ist sondern freiliegt, **dadurch gekennzeichnet, dass** die Statorwicklung (2) eine eisenlose hohlzylindrische Wicklung ist, wobei das Statorsystem (1) ferner einen Wicklungsträger (10) zur Halterung der Statorwicklung (2) aufweist, wobei der Wicklungsträger (10) an einem axialen Ende des Außenrückschlusses (3) angeordnet ist und mehrere Vorsprünge (11) aufweist, die in die axial verlaufenden Ausnehmungen am Außenumfang des Außenrückschlusses (13) eingesteckt sind, und wobei der Käfig (4) die aus Außenrückschluss (3) und Wicklungsträger (10) bestehende Einheit umgibt.

2. Statorsystem (1) nach Anspruch 1, **dadurch gekennzeichnet, dass** der Käfig (4) mehrere in axialer Richtung des Außenrückschlusses (3) verlaufende Streben (5) aufweist.

3. Statorsystem (1) nach Anspruch 2, **dadurch gekennzeichnet, dass** die Streben (5) in axial verlaufende Ausnehmungen am Außenumfang des Außenrückschlusses (3) eingespritzt sind.

4. Statorsystem (1) nach Anspruch 3, **dadurch gekennzeichnet, dass** sich die Streben (5) bündig in die Kontor des Außenumfangs einfügen.

5. Statorsystem (1) nach Anspruch 3 oder 4, **dadurch gekennzeichnet, dass** der Außenrückschluss (3) einen grundsätzlich rechteckigen Querschnitt aufweist, wobei sich die Ausnehmungen in Form von Nuten (6) in den Ecken des rechteckigen Querschnitts befinden.

6. Statorsystem (1) nach einem der Ansprüche 1 bis 5, **dadurch gekennzeichnet, dass** der Käfig (4) an den axialen Enden des Statorsystems (1) jeweils einen Lagersitz (7, 8) zur Lagerung des Innenläufers aufweist.

7. Statorsystem (1) nach einem der Ansprüche 1 bis 6, **dadurch gekennzeichnet, dass** der Außenrückschluss (3) ein stanzpaketiertes weichmagnetisches Bleckpaket ist.

8. Statorsystem (1) nach einem der Ansprüche 1 bis 7, **dadurch gekennzeichnet, dass** die freiliegenden Bereiche des Außenrückschlusses (3) lackiert sind, so dass sich zusammen mit dem Käfig (4) eine glatte Außenoberfläche des Statorsystems (1) ergibt.

9. Statorsystem (1) nach einem der Ansprüche 1 bis 8, **dadurch gekennzeichnet, dass** es sich bei dem Kunststoff um Polyphtalamid handelt.

10. Statorsystem (1) nach einem der Ansprüche 1 bis 9, **dadurch gekennzeichnet, dass** das Statorsystem (1) ferner Anschlusskontakte (13) aufweist, die auf den Wicklungsträger (10) aufgesteckt sind, wobei Wicklungsdrahtabzapfungen (14) der Statorwicklung (2) elektrisch mit den Anschlusskontakten (13) kontaktiert sind.

11. Verfahren zur Herstellung eines Statorsystems (1) nach einem der Ansprüche 1 bis 10, wobei zunächst die Statorwicklung (2) in den Außenrückschluss (3) eingesetzt wird, dann der Wicklungsträger (10) derart aufgesteckt wird, dass dessen Vorsprünge (11) in die axial verlaufenden Ausnehmungen am Außenumfang des Außenrückschlusses (3) eingreifen, und anschließend die Haltestruktur aus Kunststoff in Form eines Käfigs (4) an die aus Außenrückschluss (3) und Wicklungsträger (10) bestehende Einheit angespritzt wird.

## Claims

1. Stator system (1) for an electric motor with an internal rotor, wherein the stator system (1) comprises a stator winding (2) and a metal external return path (3) radially enclosing the stator winding (2), and wherein the external return path (3) is surrounded by a retaining structure that holds the stator system (1) together, wherein the retaining structure is injected with plastics to the external return path (3) in the form of a cage (4), so that the external return path (3) is not covered by the retaining structure in some regions, but is exposed, **characterized in that** the stator winding (2) is designed as an air-core hollow-cylindrical winding, wherein the stator system (1) furthermore comprises a winding support (10) for mounting the stator winding (2), wherein the winding support (10) is arranged at an axial end of the external return path (3) and comprises several projections (11) which are inserted into the axially extending recesses at the outer periphery of the external return path (13), and wherein the cage (4) surrounds the unit consisting of the external return path (3) and the winding support (10).

2. Stator system (1) according to claim 1, **characterized in that** the cage (4) comprises several crossbars (5) extending in the axial direction of the external return path (3).

3. Stator system (1) according to claim 2, **characterized in that** the crossbars (5) are injected into axially extending recesses at the outer periphery of the external return path (3).

4. Stator system (1) according to claim 3, **characterized in that** the crossbars (5) are fitted in a flush manner in the contour of the outer periphery.

5. Stator system (1) according to claim 3 or 4, **characterized in that** the external return path (3) has a basically rectangular cross-section, the recesses being located in the corners of the rectangular cross-section in the form of grooves (6).

6. Stator system (1) according to one of claims 1 to 5, **characterized in that** the cage (4) has one bearing receiver (7, 8) for mounting the internal rotor each at the axial ends of the stator system (1).

7. Stator system (1) according to one of claims 1 to 6, **characterized in that** the external return path (3) is a punch-stacked soft-magnetic stack of sheets.

8. Stator system (1) according to one of claims 1 to 7, **characterized in that** the exposed regions of the external return path (3) are lacquered, so that, together with the cage (4), a smooth outer surface of the stator system (1) is formed.

9. Stator system (1) according to one of claims 1 to 8, **characterized in that** the plastic is polyphthalamide.

10. Stator system (1) according to one of claims 1 to 9, **characterized in that** the stator system (1) furthermore comprises connecting contacts (13) which are pinned to the winding support (10), wherein the winding wire taps (14) of the stator winding (2) are electrically connected with the connecting contacts (13).

11. Method of manufacturing a stator system (1) according to one of claims 1 to 10, wherein the stator winding (2) is first inserted into the external return path (3), then the winding support (10) is placed onto it such that its projections (11) engage in the axially extending recesses at the outer periphery of the external return path (3), and subsequently the retaining structure is injected with plastic to the unit consisting of the external return path (3) and the winding support (10) in the form of a cage (4).

## Revendications

1. Système de stator (1) pour un moteur électrique à rotor intérieur,
le système de stator (1) comprenant un enroulement de stator (2) et un élément de reflux extérieur (3) en métal, qui entoure radialement l'enroulement de stator (2), et
l'élément de reflux extérieur (3) étant entouré d'une structure de maintien, qui maintient assemblé le système de stator (1), et
la structure de maintien en matière plastique, est moulée par injection, sur l'élément de reflux extérieur (3), sous la forme d'une cage (4), de manière à ce que l'élément de reflux extérieur (3) ne soit pas recouvert, par endroits, par la structure de maintien, mais soit au contraire dégagé à ces endroits,
**caractérisé en ce que** l'enroulement de stator (2) est un enroulement cylindrique creux à noyau d'air sans fer, le système de stator (1) comprenant par ailleurs un support d'enroulement (10) pour supporter l'enroulement de stator (2), le support d'enroulement (10) étant agencé à une extrémité axiale de l'élément de reflux extérieur (3) et présentant plusieurs protubérances (11), qui sont insérées dans des évidements d'étendue axiale à la périphérie extérieure de l'élément de reflux extérieur (3), et la cage (4) entourant l'unité formée par l'élément de reflux extérieur (3) et le support d'enroulement (10).

2. Système de stator (1) selon la revendication 1, **caractérisé en ce que** la cage (4) présente plusieurs entretoises (5) s'étendant dans la direction axiale de l'élément de reflux extérieur (3).

3. Système de stator (1) selon la revendication 2, **caractérisé en ce que** les entretoises (5) sont injectées par moulage sous pression dans des évidements d'étendue axiale dans la périphérie extérieure de l'élément de reflux extérieur (3).

4. Système de stator (1) selon la revendication 3, **caractérisé en ce que** les entretoises (5) s'insèrent de manière affleurante à la périphérie extérieure.

5. Système de stator (1) selon la revendication 3 ou la revendication 4, **caractérisé en ce que** l'élément de reflux extérieur (3) présente une section transversale en principe rectangulaire, les évidements se trouvant, sous forme de rainures (6), au niveau des sommets de la section transversale rectangulaire.

6. Système de stator (1) selon l'une des revendications 1 à 5, **caractérisé en ce que** la cage (4) présente aux extrémités axiales du système de stator (1), respectivement un siège de palier (7, 8) pour le montage du rotor intérieur.

7. Système de stator (1) selon l'une des revendications 1 à 6, **caractérisé en ce que** l'élément de reflux extérieur (3) est un empilement de tôles en matériau magnétique doux, obtenu par découpage par matriçage en paquets.

8. Système de stator (1) selon l'une des revendications 1 à 7, **caractérisé en ce que** les zones dégagées de l'élément de reflux extérieur (3) sont peintes, de sorte qu'il en découle en commun avec la cage (4), une surface extérieure lisse du système de stator (1).

9. Système de stator (1) selon l'une des revendications 1 à 8, **caractérisé en ce que** concernant la matière plastique, il s'agit de polyphtalamide.

10. Système de stator (1) selon l'une des revendications 1 à 9, **caractérisé en ce que** le système de stator (1) comporte, par ailleurs, des contacts de connexion (13), qui sont enfichés dans le support d'enroulement (10), les piquages de fil d'enroulement (14) de l'enroulement de stator (2) étant connectés électriquement aux contacts de connexion (13).

11. Procédé de fabrication d'un système de stator (1) selon l'une des revendications 1 à 10, d'après lequel on insère tout d'abord l'enroulement de stator (2) dans l'élément de reflux extérieur (3), on y engage ensuite le support d'enroulement (10) de manière à ce que ses protubérances (11) s'engagent dans les évidements d'étendue axiale de la périphérie extérieure de l'élément de reflux extérieur (3), et on applique ensuite par moulage par injection, la structure de maintien en matière plastique sous la forme d'une cage (4), sur l'unité formée par l'élément de reflux extérieur (3) et le support d'enroulement (10).
